# EUROPEAN PATENT APPLICATION

(11) **EP 1 906 039 A1**
(43) Date of publication of application: **02.04.2008**
(21) Application number: 06768039.7
(22) Date of filing: 10.07.2006
(51) Int. Cl.: F16D 3/04, B60K 7/00

(54) **SHAFT COUPLING AND IN-WHEEL MOTOR SYSTEM USING THE SAME**

(30) Priority: 11.07.2005 JP 2005201461
(71) Applicant: Bridgestone Corporation, Tokyo 104-8340 (JP); NTN Corporation, Osaka-shi, Osaka 550-0003 (JP)
(72) Inventor: TASHIRO, Katsumi c/o Bridgestone Corporation, Kodaira-shi, Tokyo 187-8531 (JP); UTSUNOMIYA, Satoshi, c/o NTN Corporation, Iwata-shi, Shizuoka 438-0037 (JP); OKAMOTO, Daiji c/o NTN Corporation, Iwata-shi, Shizuoka 438-0037 (JP)
(74) Representative: Grünecker, Kinkeldey, Stockmair & Schwanhäusser Anwaltssozietät
(86) International application number: PCT/JP2006/313677
(87) International publication number: WO 2007/007709

(57) **Abstract**

There is provide a shaft coupling of the type which can transmit power between two parallel shafts through rolling elements disposed at intersecting portions of guide grooves that intersect each other at a right angle which can always stably transmit power.

Guide grooves 5 and 6 are formed in opposed surfaces of two plates 1 and 2 such that each adjacent pair of guide grooves formed in each of the plates extend in a direction that forms an angle of 45 degrees with a reference line X connecting the midpoint between their respective intersecting portions and the center of the plates. Elongated holes 7 are formed in the retainer 4 so that each elongated hole extends along a straight line connecting the two adjacent intersecting portions between the two adjacent pairs of opposed guide grooves. Each elongated hole 7 and two pairs of opposed guide grooves 5 and 6 form a pair of rolling element guide mechanisms. This pair of rolling element guide mechanisms have mutually different positional relationships with the rotational direction of the retainer. This prevents the retainer 4 from rotating relative to the plates 1 and 2 when power is transmitted between the plates 1 and 2, thereby stabilizing transmission of power.

## Description

### TECHNICAL FIELD

The present invention relates to a shaft coupling through which two parallel shafts are adapted to be coupled together for transmitting power therebetween, and an in-wheel motor system using the same.

### BACKGROUND ART

Shaft couplings through which two shafts of an ordinary machine are coupled together for transmitting power from the driving shaft to the driven shaft are classified, according to the positional relationship between the two shafts to be coupled together, into the type in which the two shafts are aligned with each other, the type in which the two shafts cross each other, and the type in which the two shafts are parallel to (and not aligned with) each other.

Among shaft couplings of the type that couples two parallel shafts together, Oldham couplings are well known. But Oldham couplings have problems that large power cannot always be transmitted smoothly due to poor lubrication between the frictional surfaces of sliders disposed between the two shafts, and that no large (diametrical) offset of the two shafts is permissible.

As couplings other than Oldham couplings, a mechanism has been proposed which comprises a plate inserted between two axially opposed rotary members (disks), and linear-motion guides that are provided at a plurality of points of the front and back sides of the plate such that the operational direction of each guide on the front side crosses the operational direction of the corresponding guide on the back side at a right angle, whereby power is transmitted between the rotary members through the plate and the linear-motion guides (see Patent document 1).

With this arrangement, it is possible to obtain a necessary offset amount simply by changing the length of the linear-motion guides. Also, by providing a plurality of steel balls between the relatively moving surfaces in the linear-motion guides, it is possible to smoothly transmit large power. But because a large number of linear-motion guides are necessary, the manufacturing cost is very high. Also, it is difficult to mount the linear-motion guides with high accuracy, so that it is extremely troublesome and time-consuming to mount them.

The present applicant therefore proposed, before the present invention, a shaft coupling of the type in which power is transmitted between two parallel shafts through rolling elements each disposed at the intersecting portion of two guide grooves that intersect each other at a right angle (JP Patent application No. 2004-183559).

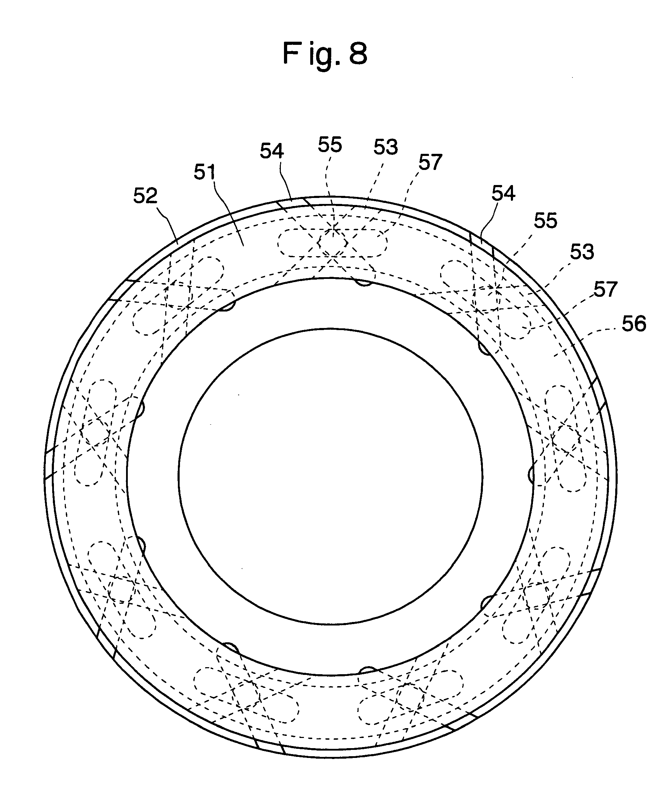

Fig. 8 shows a shaft coupling of this type. This shaft coupling comprises two axially opposed rotary members 51 and 52 having opposed surfaces formed with a plurality of guide grooves 53, 54 each intersecting the opposed groove at a right angle, and rolling elements 55 each disposed at the intersecting portion of an opposed pair of the guide grooves and received in an elongated hole 57 formed in a retainer 56. Each of the guide grooves 53 and 54 extends in a straight line in a direction that forms an angle of 45 degrees with the radial direction of the rotary members, while the elongated holes 57 of the retainer 56 each extend in a direction that forms an angle of 45 degrees with either of the guide grooves 53 and 54. For simplicity, the rotary members 51 and 52 are shown to be coaxial in Fig. 8. But ordinarily, the rotary shafts are arranged with their rotation axes offset from each other.

The rolling elements 55 are pushed by the driving rotary member 51, with their movement in the diametrical direction of the rotary members restricted by the retainer 56. The rolling elements 55 thus push the driven rotary member 52 while rolling in the guide grooves 53 and 54 and the elongated holes 57 of the retainer 56, thereby transmitting power. Since frictional resistance while power is being transmitted is small, large power can be transmitted. Also, it is possible to obtain a necessary offset amount simply by changing the lengths of the guide grooves 53 and 54 and the elongated holes 57 of the retainer 56. Also, because between the rotary members 51 and 52, only the rolling elements 55 and the retainer 56 are provided, this shaft coupling can be manufactured at a low cost and can be assembled easily.

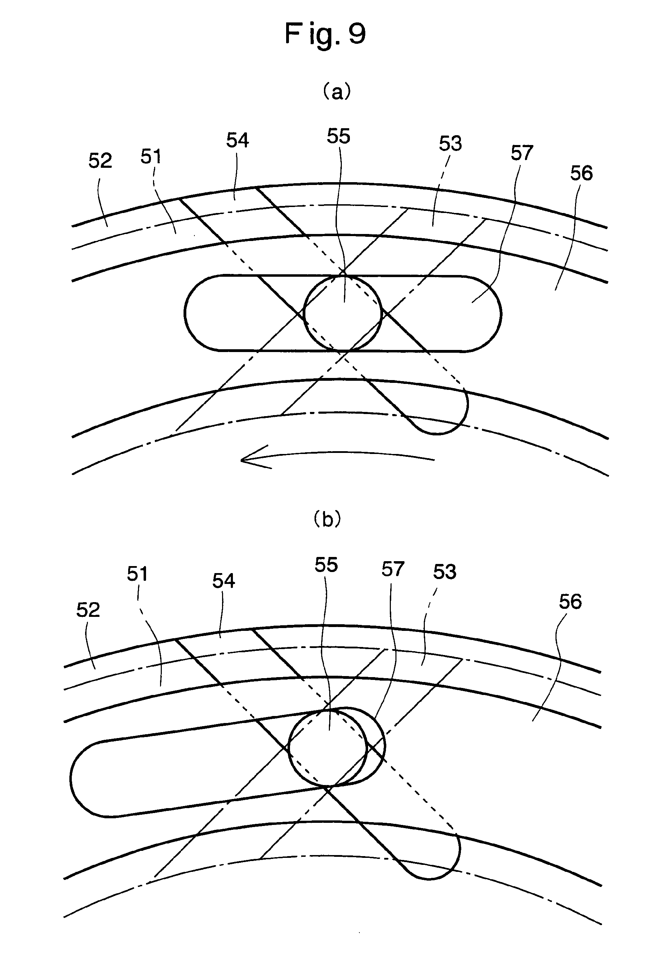

In this shaft coupling, when, as shown in Fig. 9(a), the driving rotary member 51 is driven in the direction of the arrow, thereby pushing the rolling elements 55, with each of the rolling elements 55 located at the longitudinal central portion of the elongated hole 57 of the retainer 56, the rolling elements 55 can push and rotate the retainer 56 relative to the rotary members 51 and 52 without pushing the driven rotary member 52. This means that the rolling elements 55 can move in the respective elongated holes as the intersecting portions move as shown in Fig. 9(b). The driving and driven rotary members 51 and 52 thus rotate relative to each other.

The distance of such relative rotation between the rotary members is limited to the range in which the retainer can rotate relative to the rotary members, i.e. the distance by which each rolling element can move from the longitudinal center of the elongated hole of the retainer to one end thereof. Such a distance is therefore very short and such relative rotation will not cause any significant delay in power transmission. However, because the positions of the rolling elements change relative to the elongated holes, when the offset of the rotation axes of the rotary members changes, some rolling elements may move a longer distance in the elongated holes than other rolling elements. This impairs smooth sliding movement of the rotary members relative to each other, thus destabilizing power transmission. Also, when the retainer rotates relative to the rotary members, the edges of the elongated holes may collide at one end thereof against the rolling elements, thus producing noise.

On the other hand, in in-wheel motor systems, which are now increasingly used e.g. in electric vehicles, in order to efficiently transmit power from the motor mounted in the wheel to the wheel and for improved grip of the tire and for the comfort of the passengers even while the vehicle is traveling on a rough road, it is proposed to support the stator of the motor on a wheel supporting member through at least one of an elastic member and a damper, and coupling the rotor of the motor to the wheel through a power transmission mechanism that permits offset of the rotation axes of the rotor and the wheel (Patent document 2). It is desired that such a power transmission mechanism be inexpensive, easy to assemble, and operate stably.
Patent document 1: JP patent publication 2003-260902A
Patent document 2: International publication 02/83446

### DISCLOSURE OF THE INVENTION

### OBJECT OF THE INVENTION

An object of this invention is to provide a shaft coupling of the type which can transmit power between two parallel shafts through rolling elements disposed at intersecting portions of guide grooves that intersect each other at a right angle which can always stably transmit power, and an in-wheel motor system using the same.

### MEANS TO ACHIEVE THE OBJECT

In order to achieve this object, according to the present invention, the guide grooves each extend longitudinally in a straight line, the retainer is formed with elongated holes which extend in a straight line so as to form a predetermined angle with the respective guide grooves and in which the respective rolling elements are received, the shaft coupling has a plurality of rolling element guide mechanisms each comprising one of the elongated holes and a pair of the guide grooves intersecting each other and the one of the elongated holes, and at least one of the rolling element guide mechanisms has a different positional relationship with a rotational direction of the retainer from the other rolling element guide mechanisms. By configuring the rolling element guide mechanisms such that not all of them have the same positional relationship with the rotational direction of the retainer, when the rolling elements are pushed by the driving rotary member and the retainer is pushed by the respective rolling elements, the rolling elements cannot move to rotate the retainer relative to the rotary members without pushing the driven rotary member, because the respective rolling element guide mechanisms are configured such that the retainer is rotated relative to the rotary members by different amounts by the respective rolling elements.

The elongated holes of the retainer may form an angle of 45 degrees with the respective guide grooves, and/or at least one adjacent pair of the rolling element guide mechanisms may include one of the elongated holes of the retainer as their common element so that the elongated holes can be easily designed or formed.

The plurality of rolling element guide mechanisms may be arranged at equal intervals in a circumferential direction of the rotary members so that forces that act between the rotary members and the rolling elements of the respective rolling element guide mechanisms are uniform, thereby further improving the behavior of the coupling during transmission of power.

The present invention also provides an in-wheel motor system wherein as the power transmission mechanism for coupling the rotor of the motor mounted in a vehicle wheel to the vehicle wheel, the abovementioned shaft coupling according to this invention is used to reduce the cost of the power transmission mechanism, make it easier to assembly the system, and stabilize the operation of the system.

### ADVANTAGES OF THE INVENTION

With the shaft coupling of the present invention, since at least one rolling element guide mechanism has a different positional relationship with the rotational direction of the retainer from the other rolling element guide mechanism so that the retainer does not rotate relative to the rotary members, it is possible to eliminate noise due to collision of the rolling elements against the edges of the elongated holes at ends thereof. Also, this permits smooth sliding movement of the rotary members relative to each other when the offset of their rotation axes changes, thereby allowing stable transmission of power.

In the in-wheel motor system according to this invention, as the power transmission mechanism for coupling the rotor of the motor to the wheel, the above-described shaft coupling is used. Such a power transmission mechanism is inexpensive, easy to assemble, and operates stably.

### BRIEF DESCRIPTION OF THE DRAWINGS

Fig. 1(a) is a side view of a shaft coupling of a first embodiment (rotation axes are aligned).
Fig. 1(b) is a sectional view taken along line I-I Fig. 1(a).
Fig. 2 shows the structure of a portion of the shaft coupling of Fig. 1.
Fig. 3 shows an imaginary behavior of the shaft coupling of Fig. 1.
Fig. 4(a) is a side view of the shaft coupling of Fig. 1, showing its use state (rotation axes are offset).
Fig. 4(b) is a sectional view taken along line IV-IV of Fig. 4(a).
Fig. 5 is a side view of a shaft coupling of a second embodiment (rotation axes are aligned).
Fig. 6 is a side view of a shaft coupling of a third embodiment (rotation axes are aligned).
Fig. 7 is a vertical sectional view of an in-wheel motor system in which the shaft coupling of the first embodiment, as modified, is mounted.
Fig. 8 is a side view of a conventional shaft coupling (rotation axes are aligned).
Figs. 9(a) and (b) show behaviors of the shaft coupling of Fig. 8.

### DESCRIPTION OF NUMERALS

1, 2. Plate
3. Steel ball
4. Retainer
5, 6. Guide groove
7. Elongated hole
8. Rolling element guide mechanism
10. Wheel
11. Motor
12. Stator
13. Stationary case
14. Shock absorbing mechanism
15. Axle
16. Knuckle
19. Linear-motion guide
20. Spring
21. Damper
22. Rotor
24. Rotary case
25. Shaft coupling
26, 27. Plate
28. Steel balls
29. Retainer
30. Hub
A. Input shaft
B. Output shaft

### BEST MODE FOR EMBODYING THE INVENTION

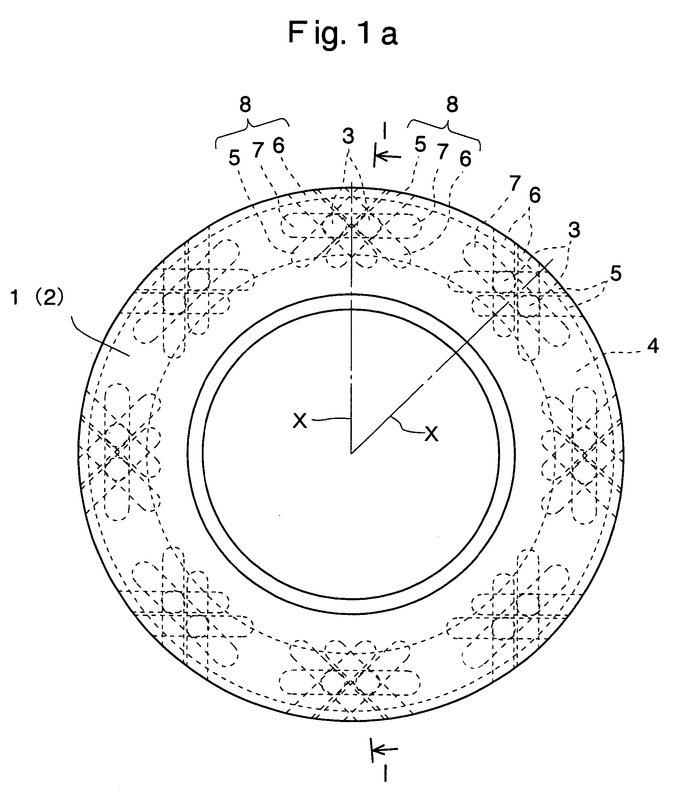

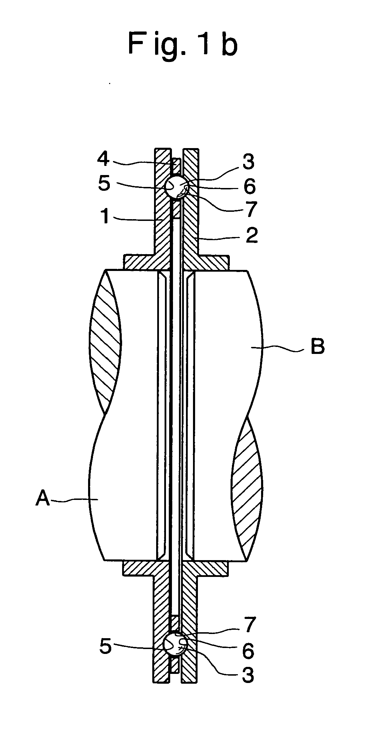

The embodiments of the present invention are now described with reference to Figs. 1 to 7. Figs. 1 to 4 show a shaft coupling according to the first embodiment. As shown in Figs. 1(a) and 1(b), this shaft coupling includes axially opposed plates 1 and 2 as rotary members that are fitted, respectively, on opposed ends of input and output shafts A and B having rotation axes that are parallel to each other and diameters that are equal to each other. Disposed between the plates 1 and 2 are a plurality of steel balls 3 as rolling elements, and a retainer 4 that restricts radial movements of the respective steel balls 3. Power is transmitted between the plates 1 and 2 through the steel balls 3. The plates 1 and 2 and the retainer 4 are made of a metal, and the plates 1 and 2 and the retainer 4, as well as the steel balls 3, are subjected to hardening treatment such as heat treatment or shot peening. For simplicity, Fig. 1 shows the input and output shafts A and B as being coaxial. But actually, the input and output shafts A and B are ordinarily arranged with their rotation axes offset from each other.

The plates 1 and 2 are doughnut-shaped disks each having a cylindrical portion formed on its radially inner periphery and fitted on one of the opposed ends of the input and output shafts A and B.

In the surface of each of the plates 1 and 2 that faces the surface of the other of the plates 1 and 2, eight pairs of (a total of 16) guide grooves 5 or 6 are formed so that each pair of grooves 5 or 6 are located close to each other, and intersect the corresponding pair of guide grooves 6 or 5 formed in the other of the plates 1 and 2 at a right angle at two separate intersecting portions. The midpoint between these two separate intersecting portions is circumferentially spaced from the adjacent midpoints at equal intervals.

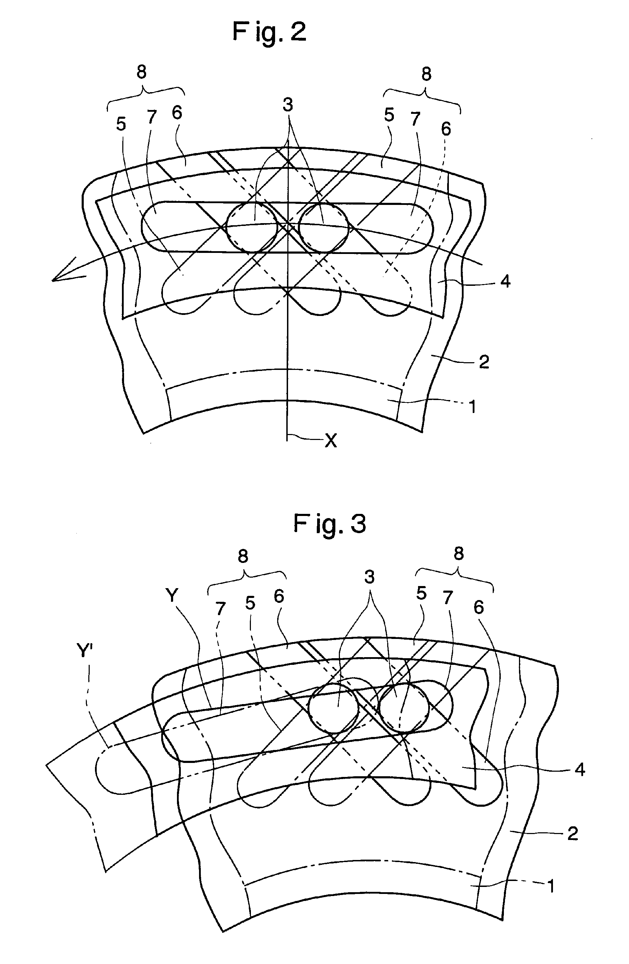

As also shown in Fig. 2, each pair of guide grooves 5 or 6 form an angle of 45 degrees with a reference line X connecting the corresponding midpoint and the center of the corresponding plate. The guide grooves 5 and 6 have a length that is equal to the sum of the maximum radial moving distance of the plates when the rotation axes of the input and output shafts A and B are displaced from each other and the diameter of the steel balls 3.

The retainer 4 is formed with elongated holes 7 each extending along a straight line connecting the two separate intersecting portions of the two pairs of opposed guide grooves, and circumferentially spaced from each other at equal intervals. Thus, each elongated hole 7 forms an angle of 45 degrees with each of the corresponding two pairs of (a total of four) guide grooves 5 and 6. The elongated holes 7 have a length that is equal to the sum of the distance between the two separate intersecting portions and the length of each of the guide grooves 5 and 6.

Each of the steel balls 3 is located at one of the separate intersecting portions, and received in the corresponding elongated hole 7 of the retainer 4 so as to roll in the elongated hole while being guided by the guide grooves 5 and 6.

Thus, each elongated hole 7 of the retainer 4 serves as a common element of two adjacent rolling element guide mechanisms 8 each comprising two opposed guide grooves 5 and 6, which intersect the elongated hole 7 and guide one steel ball 3. Each of two adjacent rolling element guide mechanisms 8 that include one elongated hole 7 as their common element have mutually different positional relationships with the rotational direction of the retainer 4 (direction of the arrow in Fig. 2), which serve to effectively improve the behavior of the shaft coupling, as will be described below.

The mechanism of transmission of power through this shaft coupling is now described. When the input shaft A of this shaft coupling is driven and the plate 1, which is fixed to the shaft A, rotates, the steel balls 3 are pushed from a circumferential direction by the guide grooves 5 formed in the input plate 1. The steel balls 3 thus tend to rotate the retainer 4 relative to both plates 1 and 2 without pushing the output plate 2.

But as shown in Fig. 3, in order for the respective steel balls 3 of the right and left rolling element guide mechanisms 8 in the figure to move without pushing the output plate 2 as the intersecting portions move, the single common elongated hole 7 has to be moved to the position Y shown by solid line (by the ball 3 on the right) and simultaneously to the position Y' shown by two-dot chain line (by the ball 3 on the left). The reason why the retainer 4 has to be rotated to different degrees in order for the right and left steel balls to be movable in the above manner is because, as described above, the two mechanisms including each elongated hole as their common element have mutually different positional relationships with the rotational direction of the retainer.

Thus, the retainer 4 cannot rotate relative to the plates, so that the steel balls 3 push the guide grooves 6 of the plate 2, which is fixed to the output shaft B, thereby rotating the output plate 2, with the retainer 4 restricting movements of the steel balls 3 in the radial direction of the plates. Power is thus transmitted to the output shaft B. Power is transmitted in the same manner in the opposite rotational direction of the input shaft A, or from the output plate B to the input plate A, too.

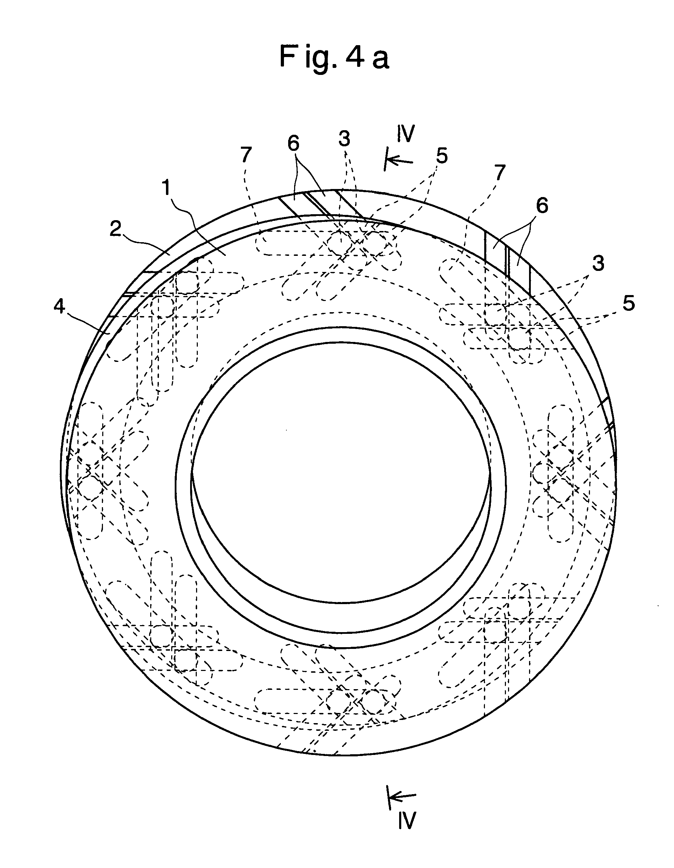

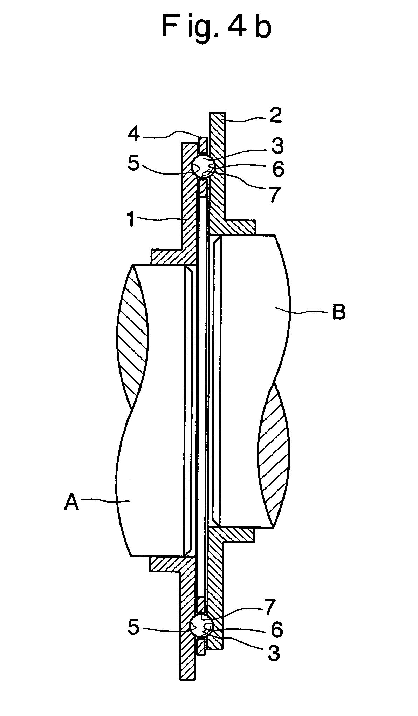

Also, power is transmitted basically in the same manner even if, as is ordinarily the case, the rotation axes of the input and output shafts A and B are offset from each other, as shown in Figs. 4(a) and 4(b). In the state of Figs. 4(a) and 4(b), because the rotation axes of the plates 1 and 2 are offset from each other, the intersecting portions between the guide grooves 5 and 6 change when the plates rotate. Thus, power is transmitted between the plates 1 and 2 through the steel balls 3 with the steel balls 3 rolling along the guide grooves 5 and 6 and the elongated holes 7 of the retainer 4.

With this shaft coupling, because the retainer 4 never rotates relative to the plates 1 and 2, no noise is produced during operation of the coupling. For example, even if the offset between the rotation axes of the plates 1 and 2 changes, such as if the plates move from the state of Figs. 1(a) and 1(b) to the state of Figs. 4(a) and 4(b), the plates 1 and 2 can smoothly slide relative to each other, so that power can be always stably transmitted.

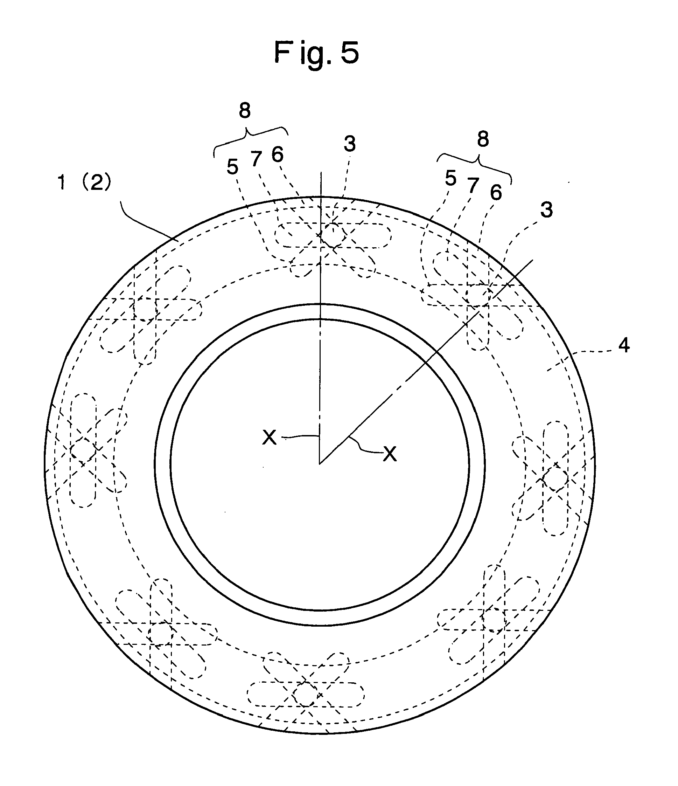

Fig. 5 shows the second embodiment. The shaft coupling of this embodiment is basically of the same structure as the first embodiment. But it differs from the first embodiment in that, of the eight pairs of rolling element guide mechanisms 8 of the first embodiment, four pairs that circumferentially alternate with the other four pairs are replaced with four rolling element guide mechanisms on the right-hand side of the respective lines X only, and the other four pairs are replaced with four rolling element guide mechanisms on the left-hand side of the respective lines X only. Also, the elongated holes 7 of the retainer 4 have a length that is equal to the length of the guide grooves 5 and 6.

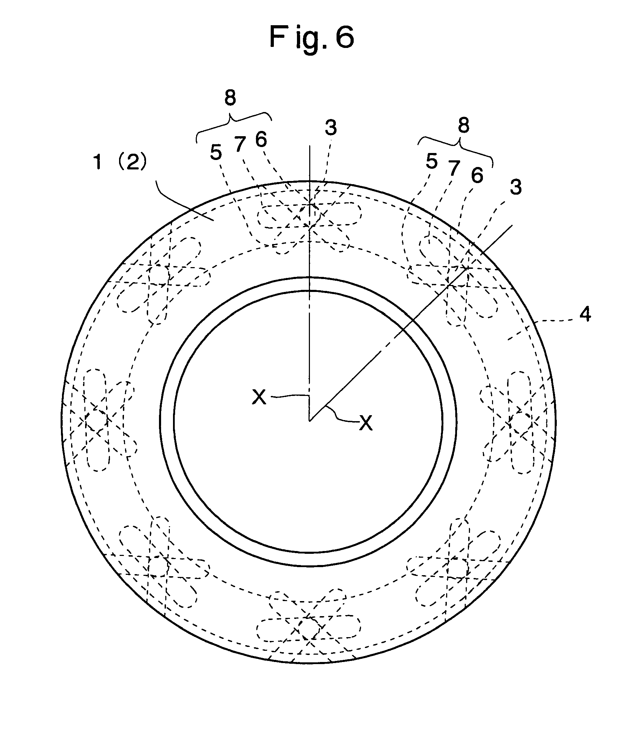

Fig. 6 shows the third embodiment, which is basically of the same structure as the second embodiment, but differs therefrom in that the respective rolling element guide mechanisms 8 are circumferentially displaced so that the centers of the intersecting portions between the guide grooves of the respective rolling element guide mechanisms 8 are located on the respective reference lines X. As result, four rolling element guide mechanisms 8 that circumferentially alternate with the other four mechanisms 8 slightly rotate counterclockwise, while the other four mechanisms 8 slightly rotate clockwise, about the intersecting portions of their respective guide grooves from their positions where their guide grooves 5 and 6 form an angle of 45 degrees with the respective reference lines X.

Either of the second and third embodiments, as well as the first embodiment, includes rolling element guide mechanisms 8 having different positional relationships from each other with respect to the rotational direction of the retainer. Thus, the retainer 4 never rotates relative to the plates 1 and 2, so that power can be always stably transmitted and no noise is produced during operation. In the third embodiment, since the rolling element guide mechanisms 8 are arranged circumferentially at equal intervals, forces that act between the plates 1 and 2 and the respective steel balls 3 are uniform, so that the behavior of the coupling while power is being transmitted is smoother.

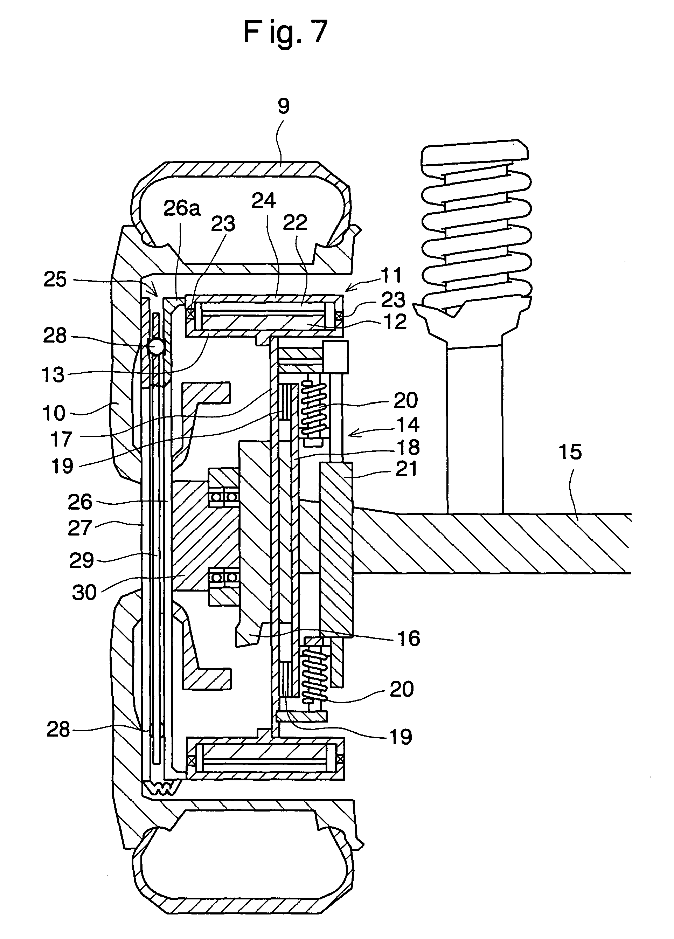

Fig. 7 shows an in-wheel motor system in which the shaft coupling of the first embodiment, as modified, is mounted. This in-wheel motor system includes a direct-drive motor 11 of the outer rotor type mounted in a vehicle wheel 10 with a tire 9 to drive the wheel 10. A stationary case 13 in which the stator 12 of the motor 11 is mounted is supported by a knuckle 16, which is a wheel supporting member provided at the end of an axle 15, through a shock absorbing mechanism 14 for improved grip of the tire and for the comfort of passengers. The shock absorbing mechanism 14 includes an outer plate 17 mounted to the stationary case 13 of the motor 11, and an inner plate 18 mounted to the knuckle 16. The plates 17 and 18 are connected to each other through linear-motion guides 19 for restricting the plates 17 and 18 so as to be movable only in the height direction of the vehicle relative to each other, and springs 20 and a damper 21 that are compressible and expandable in the height direction of the vehicle.

The rotor 22 of the motor 11 is fixed to a rotary case 24 mounted around the stationary case 13 through bearings 23. The rotary case 24 is coupled to the wheel 10 through a shaft coupling 25, which is a modification of the first embodiment, so that power is efficiently transmitted from the motor 11 to the wheel 10.

The shaft coupling 25 comprises an input plate 26 having a cylindrical mounting portion 26a formed on the outer edge thereof and mounted to the rotary case 24, an output plate 27 having its outer portion mounted to the wheel 10, a plurality of steel balls 28 disposed between the plates 26 and 27, and a retainer 29 for restricting movements of the steel balls 28 in radial directions of the plates. Through the input plate 26, a hub 30 which is rotatably mounted on the knuckle 16 and rotationally fixed to the wheel 10 extends with a play left therebetween that is slightly larger than the offset between the rotation axes of the plates 26 and 27. The output plate 27 is fitted on the outer periphery of the hub 30. Otherwise, this shaft coupling is structurally and functionally identical to the first embodiment.

## Claims

1. A shaft coupling comprising two rotary members each having a rotation axis that is parallel to and not coaxial with the rotation axis of the other rotary member, and each having a surface axially opposed to the surface of the other rotary member and formed with a plurality of guide grooves each intersecting the corresponding guide groove of the other rotary member at a right angle, rolling elements each disposed at an intersecting portion between an opposed pair of the guide grooves so as to roll while being guided by the guide grooves, and a retainer for restricting movements of the rolling elements in radial directions of the rotary members, whereby power is transmitted between the rotary members through the rolling elements, **characterized in that** the guide grooves each extend longitudinally in a straight line, that the retainer is formed with elongated holes which extend in a straight line so as to form a predetermined angle with the respective guide grooves and in which the respective rolling elements are received, that the shaft coupling has a plurality of rolling element guide mechanisms each comprising one of the elongated holes and a pair of the guide grooves intersecting each other and said one of the elongated holes, and that at least one of the rolling element guide mechanisms has a different positional relationship with a rotational direction of the retainer from the other rolling element guide mechanisms.

2. The shaft coupling of claim 1 wherein the elongated holes of the retainer form an angle of 45 degrees with the respective guide grooves.

3. The shaft coupling of claim 1 or 2 wherein at least one adjacent pair of the rolling element guide mechanisms include one of the elongated holes of the retainer as their common element.

4. The shaft coupling of any of claims 1 to 3 wherein the plurality of rolling element guide mechanisms are arranged at equal intervals in a circumferential direction of the rotary members.

5. An in-wheel motor system comprising a motor mounted in a vehicle wheel to drive the vehicle wheel, at least one of an elastic member and a damper through which a stator of the motor is supported by a wheel supporting member, and a power transmission mechanism through which a rotor of the motor is coupled to the vehicle wheel, said power transmission mechanism being configured to permit offset of the rotation axes of the rotor and the wheel, **characterized in that** the power transmission mechanism is the shaft coupling of any of claims 1 to 4.
